# EUROPEAN PATENT APPLICATION

(11) **EP 4 752 108 A1**
(43) Date of publication of application: **03.06.2026**
(21) Application number: 25214526.3
(22) Date of filing: 10.11.2025
(51) Int. Cl.: C01G 51/40, C01G 51/68, C25B 9/65, H01M 8/0217, H01M 8/0228

(54) **LSM-MCO COMPOSITE POWDERS FOR SOLID OXIDE ELECTROCHEMICAL CELL AND INTERCONNECT COATINGS AND METHODS OF FORMING SAME**

(30) Priority: 15.11.2024 US 202463721152 P
(71) Applicant: Bloom Energy Corporation, San Jose, CA 95134 (US)
(72) Inventor: LU, Zigui, San Jose 95134 (US); STOUT, Perry, San Jose 95134 (US); GASDA, Michael, San Jose 95134 (US); ARMSTRONG, Tad, San Jose 95134 (US); XIAO, Guoliang, San Jose 95134 (US)
(74) Representative: Wichmann, Hendrik

(57) **Abstract**

A method includes providing a precursor powder mixture containing lanthanum oxide particles, strontium oxide particles, manganese oxide particles and cobalt oxide particles and calcining the precursor powder mixture, such that a lanthanum strontium manganate - manganese cobalt oxide composite powder containing composite particles including perovskite and spinel phases is formed.

## Description

### FIELD

The present disclosure is directed to LSM-MCO composite powders, and methods of forming the same.

### BACKGROUND

In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrocarbon fuel, such as methane, natural gas, pentane, ethanol, or methanol, as well as hydrocarbon fuels blended with pure hydrogen. The SOFC, operating at a temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and air are distributed to each cell using risers contained within the stack. Fuel cell stacks may also be internally manifolded for fuel and externally manifolded for air. When configured in this fashion, the gas flows through openings or holes in the supporting layer of each fuel cell, such as the electrolyte layer, and gas flow separator of each cell.

Fuel cell stacks are frequently built from a multiplicity of cells in the form of planar elements, tubes, or other geometries. Fuel and air are provided to electrochemically active surfaces, which can be large. One component of a fuel cell stack is the so called gas flow separator (referred to as a gas flow separator plate in a planar stack) that separates the individual cells in the stack. In a fuel cell configuration for producing electricity, the gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. In this case, the gas flow separator plate which functions as an interconnect is made of or contains an electrically conductive material. Gas flow separator plates may be coated with barrier layers before incorporating such plates into fuel cell stacks.

### SUMMARY

According to various embodiments, a method includes providing a precursor powder mixture containing lanthanum oxide particles, strontium oxide particles, manganese oxide particles and cobalt oxide particles and calcining the precursor powder mixture, such that a lanthanum strontium manganate - manganese cobalt oxide composite powder containing composite particles including perovskite and spinel phases is formed.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a fuel cell column, according to various embodiments of the present disclosure.
FIG. 1B is a perspective view of one counter-flow solid oxide fuel cell stack included in the column of FIG. 1A, according to various embodiments of the present disclosure.
FIG. 1C is a side cross-sectional view of a portion of the stack of FIG. 1B, according to various embodiments of the present disclosure.
FIG. 2A is a top view of the air side of an interconnect of the stack of FIG. 1B.
FIG. 2B is a top view of the fuel side of the interconnect of the stack of FIG. 1B.
FIG. 3A is a perspective view of a fuel cell stack, according to various embodiments of the present disclosure.
FIG. 3B is an exploded perspective view of a portion of the stack of FIG. 3A, according to various embodiments of the present disclosure.
FIG. 3C is a top view of the fuel side of a crossflow interconnect included in the stack of FIG. 3A.
FIG. 3D is a schematic view of a fuel cell included in the stack of FIG. 3A, according to various embodiments of the present disclosure.
FIG. 4A is a plan view showing an air side of the crossflow interconnect of FIG. 3C.
FIG. 4B is a plan view showing a fuel side of the crossflow interconnect of FIG. 3C.
FIG. 5 is a schematic side cross-sectional view of an electrochemical cell, according to one embodiment of the present disclosure.
FIG. 6 is a schematic side cross-sectional view of an interconnect for an electrochemical cell stack or column, according to another embodiment of the present disclosure.
FIGS. 7, 8 and 9 are method step flow charts for forming composite powders, according to various embodiments of the present disclosure.

### DETAILED DESCRIPTION

The various embodiments will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be hydrogen (H₂) or a hydrocarbon fuel, such as methane, natural gas, ethanol, or methanol, a hydrogen containing fuel such as ammonia, or a hydrocarbon fuel blended with hydrogen. The fuel cell, operating at a temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

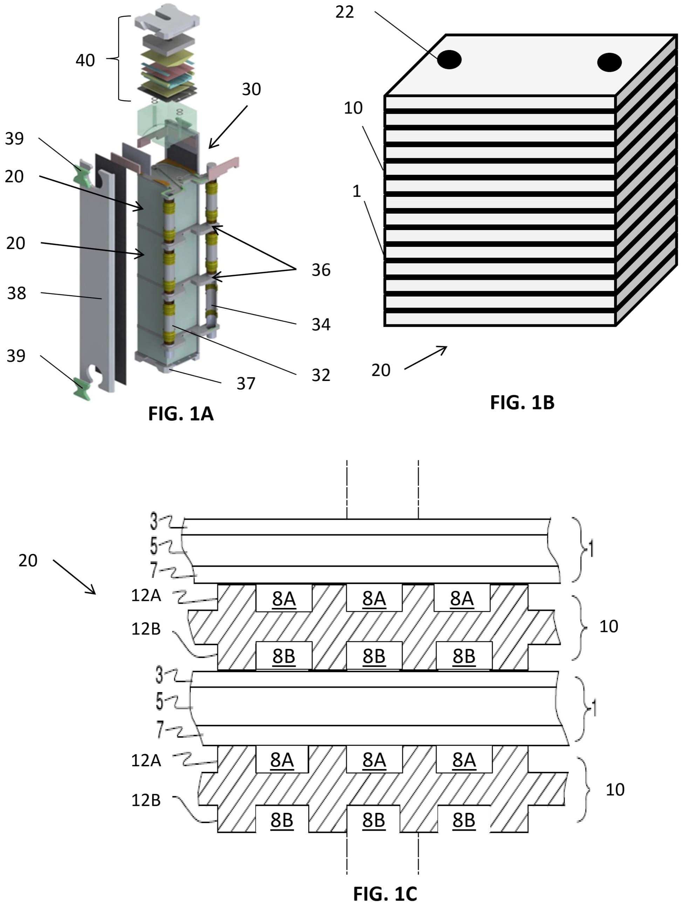

FIG. 1A is a perspective view of an externally manifolded electrochemical cell column 30, FIG. 1B is a perspective view of one counterflow solid oxide electrochemical cell stack 20 included in the column 30 of FIG. 1A, and FIG. 1C is a side cross-sectional view of a portion of the stack 20 of FIG. 1B.

In various embodiments, the column 30 may be described as being operated as a solid oxide fuel cell (SOFC) column 30. However, it should be noted that the electrochemical column 30 may also be operated as an electrolyzer column (e.g., a solid oxide electrolyzer cell (SOEC) column). In the SOEC column, the anode is the air electrode, and the cathode is the fuel (e.g., steam) electrode, while in a SOFC column the anode is the fuel electrode, and the cathode is the air electrode. Thus, the electrode to which the fuel (e.g., hydrogen or hydrocarbon fuel in a SOFC, and steam in a SOEC) is supplied may be referred to as the fuel electrode and the opposing electrode may be referred to as the air electrode in both SOFC and SOEC cells.

Referring to FIGS. 1A and 1B, the column 30 may include one or more stacks 20, a fuel inlet conduit 32, an anode exhaust conduit 34, and anode feed/retum assemblies 36 (e.g., anode splitter plates (ASPs) 36). The column 30 may also include side baffles 38 and a compression assembly 40. The side baffles 38 may be connected to the compression assembly 40 and an underlying column component (e.g., column base 37) by ceramic connectors 39. The fuel inlet conduit 32 is fluidly connected to the ASPs 36 and is configured to provide the fuel feed to each ASP 36, and anode exhaust conduit 34 is fluidly connected to the ASPs 36 and is configured to receive anode fuel exhaust from each ASP 36.

The ASPs 36 are disposed between the stacks 20 and are configured to provide a hydrocarbon fuel containing fuel feed to the stacks 20 and to receive anode fuel exhaust from the stacks 20. For example, the ASPs 36 may be fluidly connected to internal fuel riser channels 22 formed in the stacks 20, as discussed below.

Referring to FIGS. 1B and 1C, the stack 20 includes multiple fuel cells 1 that are separated by interconnects 10, which may also be referred to as gas flow separator plates or bipolar plates. Each fuel cell 1 includes a cathode electrode 3, a solid oxide electrolyte 5, and an anode electrode 7.

Each interconnect 10 electrically connects adjacent fuel cells 1 in the stack 20. In particular, an interconnect 10 may electrically connect the anode electrode 7 of one fuel cell 1 to the cathode electrode 3 of an adjacent fuel cell 1. FIG. 1C shows that the lower fuel cell 1 is located between two interconnects 10.

Each interconnect 10 includes fuel ribs 12A and air ribs 12B that at least partially define the respective fuel channels 8A and air channels 8B. The interconnect 10 may operate as a gas-fuel separator that separates a fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack 20, there may be an air end plate or fuel end plate (not shown) for providing air or fuel, respectively, to the end electrode. Alternatively, the air end plate or fuel end plate may comprise the same interconnect 10 used throughout the stack 20.

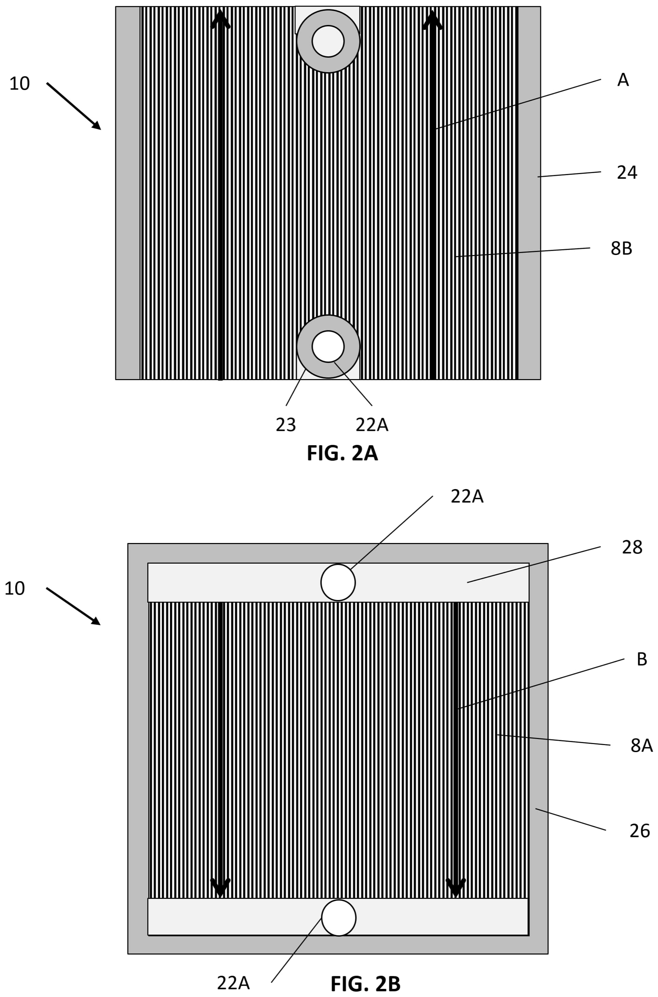

FIG. 2A is a top view of the air side of an exemplary interconnect 10, and FIG. 2B is a top view of a fuel side of the interconnect 10. Referring to FIGS. 1C and 2A, the air side includes the air channels 8B. Air flows through the air channels 8B to a cathode electrode 3 of an adjacent fuel cell 1. In particular, the air may flow across the interconnect 10 in a first direction A as indicated by the arrows.

Ring seals 23 may surround fuel holes 22A of the interconnect 10, to prevent fuel from contacting the cathode electrode. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the air side ribs 12B.

Referring to FIGS. 1C and 2B, the fuel side of the interconnect 10 may include the fuel channels 8A and fuel manifolds 28 (e.g., fuel plenums). Fuel flows from one of the fuel holes 22A, into the adjacent manifold 28, through the fuel channels 8A, and to an anode 7 of an adjacent fuel cell 1. Excess fuel and anode exhaust may flow into the other fuel manifold 28 and then into the adjacent fuel hole 22A. In particular, the fuel may flow across the interconnect 10 in a second direction B, as indicated by the arrows. The second direction B may be opposite from the first direction A (see FIG. 2A).

A frame-shaped seal 26 is disposed on a peripheral region of the fuel side of the interconnect 10. The peripheral region may be an elevated plateau which does not include ribs or channels. The surface of the peripheral region may be coplanar with tops of the fuel side ribs 12A. The surface of the manifold 28 may be coplanar with the bottom of the fuel channels or optionally may be below the surface of the bottom of the fuel channels. The surface depth of the manifold 28 may vary along the length of the fuel channels 8A (the length direction being perpendicular to the direction of air and fuel flows through the interconnect channels).

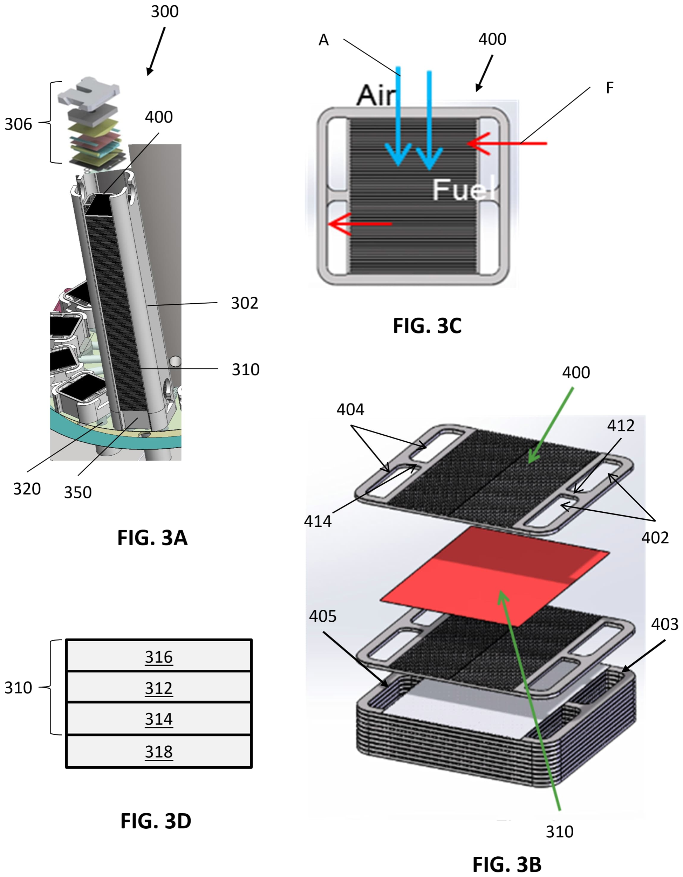

FIG. 3A is a perspective view of a fuel cell stack 300, according to various embodiments of the present disclosure, FIG. 3B is an exploded perspective view of a portion of the stack 300 of FIG. 3A, FIG. 3C is a top view of the fuel side of an interconnect 400 included in the stack 300, and FIG. 3D is a schematic view of a fuel cell included in the stack 300.

Referring to FIGS. 3A-3D, the fuel cell stack 300, which may also be referred to as a fuel cell column because it lacks ASPs, includes multiple fuel cells 310 that are separated by interconnects 400, which may also be referred to as gas flow separator plates or bipolar plates. One or more stacks 300 may be thermally integrated with other components of a fuel cell power generating system (e.g., one or more anode tail gas oxidizers, fuel reformers, fluid conduits and manifolds, etc.) in a common enclosure or "hotbox." Similarly, one or more stacks 300 may be integrated with other components of a hydrogen gas generating system (an electrolyzer module) in a common enclosure or hotbox.

The interconnects 400 are made from an electrically conductive metal material. For example, the interconnects 400 may comprise a chromium alloy, such as a Cr-Fe alloy. The interconnects 400 may typically be fabricated using a powder metallurgy technique that includes pressing and sintering a Cr-Fe powder, which may be a mixture of Cr and Fe powders or an Cr-Fe alloy powder, to form a Cr-Fe interconnect in a desired size and shape (e.g., a "net shape" or "near net shape" process). A typical chromium-alloy interconnect 400 comprises more than about 90% chromium by weight, such as about 94-96% (e.g., 95%) chromium by weight. An interconnect 400 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities. Interconnects 10 in FIGS. 1A, 1B, 1C, 2A and 2B may be made of the same materials as interconnects 400.

Each fuel cell 310 may include a solid oxide electrolyte 312, an anode 314, and a cathode 316. In some embodiments, the anode 314 and the cathode 316 may be printed on the electrolyte 312. In other embodiments, a conductive layer 318, such as a nickel mesh, may be disposed between the anode 314 and an adjacent interconnect 400. The fuel cell 310 does not include through-holes, such as the fuel holes extending through the electrolyte layers of fuel cells illustrated in FIG. 1B. As such, the fuel cell 310 may avoid cracks that could be generated due to the presence of such through-holes.

An upper most interconnect 400 and a lowermost interconnect 400 of the stack 300 may be different ones of an air end plate or fuel end plate including features for providing air or fuel, respectively, to an adjacent end fuel cell 310. As used herein, an "interconnect" may refer to either an interconnect located between two fuel cells 310 or an end plate located at an end of the stack and directly adjacent to only one fuel cell 310. Since the stack 300 does not include ASPs and the end plates associated therewith, the stack 300 may include only two end plates. As a result, stack dimensional variations associated with the use of intra-column ASPs may be avoided. Alternatively, the end plates may comprise the same design as the interconnect 400.

The stack 300 may include side baffles 302, a fuel plenum 350, and a compression assembly 306. The side baffles 302 may be formed of a ceramic material and may be disposed on opposing sides of the fuel cell stack 300 containing stacked fuel cells 310 and interconnects 400. The side baffles 302 may connect the fuel plenum 350 and the compression assembly 306, such that the compression assembly 306 may apply pressure to the stack 300. The side baffles 302 may be curved baffle plates, such that each baffle plate covers at least portions of three sides of the fuel cell stack 300. For example, one baffle plate may fully cover the fuel inlet riser side of the stack 300 and partially cover the adjacent front and back sides of the stack, while the other baffle plate fully covers the fuel outlet riser side of the stack and partially covers the adjacent portions of the front and back sides of the stack. The remaining uncovered portions for the front and back sides of the stack allow air to flow through the stack 300. The curved baffle plates provide an improved air flow control through the stack. The fuel plenum 350 may be disposed below the stack 300 and may be configured to provide a hydrogen-containing fuel feed to the stack 300 and may receive an anode fuel exhaust from the stack 300. The fuel plenum 350 may be connected to fuel inlet and outlet conduits 320 which are located below the fuel plenum 350.

Each interconnect 400 electrically connects adjacent fuel cells 310 in the stack 300. In particular, an interconnect 400 may electrically connect the anode electrode of one fuel cell 310 to the cathode electrode of an adjacent fuel cell 310. As shown in FIG. 3C, each interconnect 400 may be configured to channel air in a first direction A, such that the air may be provided to the cathode of an adjacent fuel cell 310. Each interconnect 400 may also be configured to channel fuel in a second direction F, such that the fuel may be provided to the anode of an adjacent fuel cell 310. Directions A and F may be perpendicular, or substantially perpendicular. As such, the interconnects 400 may be referred to as crossflow interconnects.

The interconnect 400 may include fuel holes that extend through the interconnect 400 and that are configured for fuel distribution. For example, the fuel holes may include one or more fuel inlets 402 and one or more fuel (e.g., anode exhaust) outlets 404, which may also be referred to as anode exhaust outlets 404. The fuel inlets and outlets 402, 404 may be disposed outside of the perimeter of the fuel cells 310. As such, the fuel cells 310 may be formed without corresponding through-holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions 412. In one embodiment, each interconnect 400 contains two fuel outlets 404 separated by a neck portion 414 of the interconnect 400, as shown in FIG. 3B. However, more than two fuel outlets 404 may be included, such as three to five outlets separated by two to four neck portions 414.

The fuel inlets 402 of adjacent interconnects 400 may be aligned in the stack 300 to form one or more fuel inlet risers 403. The fuel outlets 404 of adjacent interconnects 400 may be aligned in the stack 300 to form one or more fuel outlet risers 405. The fuel inlet riser 403 may be configured to distribute fuel received from the fuel plenum 350 to the fuel cells 310. The fuel outlet riser 405 may be configured to provide anode exhaust received from the fuel cells 310 to the fuel plenum 350.

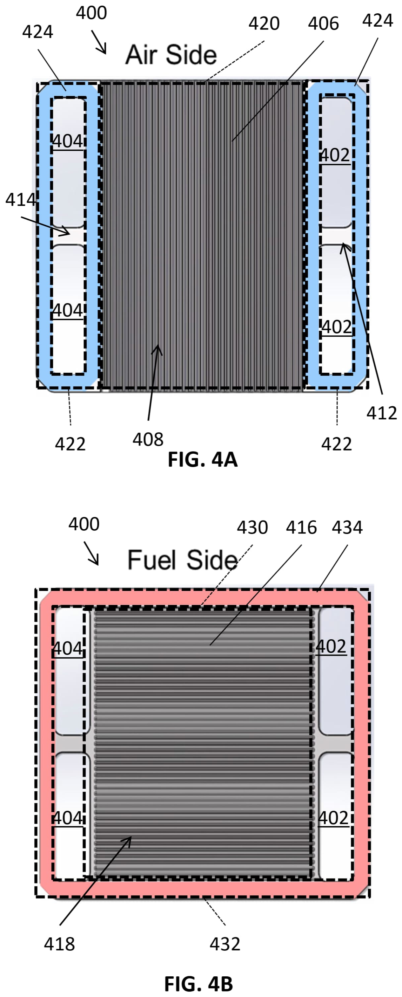

Unlike the flat side baffles 38 of FIG. 1A, the side baffles 302 may be curved around edges of the interconnects 400. In particular, the side baffles 302 may be disposed around the fuel inlets 402 and outlets 404 of the interconnects 400. Accordingly, the side baffles may more efficiently control air flow through air channels of the interconnects 400, which are exposed between the side baffles 302 and are described in detail with regard to FIGS. 4A and 4B.

In various embodiments, the stack 300 may include from about 200 to 400 fuel cells, such as about 250 to 350 fuel cells, more particularly from about 275 to 325 fuel cells, which may be provided with fuel using only the fuel risers 403, 405. The crossflow configuration allows for a large number of fuel cells to be provided with fuel, without the need for ASPs or external stack fuel manifolds, such as external conduits 32, 34 shown in FIG. 1A.

Other stack configurations are possible in addition to stack 20 and stack 300. In particular, the stacks may be internally manifolded for fuel and air with fuel and air risers extending through openings in the fuel cell layers and/or in the interconnect plates. Such fuel cell stacks are disclosed in U.S. Patent Application Serial No. 63/598,678, filed on November 14, 2023, entitled "Internally Manifolded Interconnects with Plural Flow Directions and Electrochemical Cell Column Including Same," which is incorporated herein by reference in its entirety.

Each interconnect 400 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 400 may comprise a metal (e.g., a chromium-iron alloy, such as 4-6 weight percent iron, optionally 1 or less weight percent yttrium and balance chromium alloy) and may electrically connect the anode or fuel-side of one fuel cell 310 to the cathode or air side of an adjacent fuel cell 310. An electrically conductive contact layer, such as a nickel contact layer (e.g., a nickel mesh), may be provided between anode and each interconnect 400. Another optional electrically conductive contact layer may be provided between the cathode electrodes and each interconnect 400.

A surface of an interconnect 400 that in operation is exposed to an oxidizing environment (e.g., air), such as the cathode-facing side of the interconnect 400 in an SOFC configuration (or anode or air electrode in a SOEC configuration), may be coated with a protective coating layer in order to decrease the growth rate of a chromium oxide surface layer on the interconnect and to suppress evaporation of chromium vapor species which can poison the air electrode. Typically, the coating layer, which can comprise a perovskite such as LSM, may be formed using a spray coating or dip coating process. Alternatively, other metal oxide coatings, such as a spinel, such as manganese cobalt oxide spinel (MCO), can be used instead of or in addition to LSM. Any spinel having the composition Mn₂₋ₓ Co₁₊ₓ O₄ (0 ≤ x ≤ 1) or written as y(Mn₃ O₄) + (1-y)(Co₃ O₄), where (1/3 ≤ y ≤ 2/3) or written as (Mn, Co)₃ O₄ may be used. In other embodiments, a mixed layer of LSM and MCO, or a stack of LSM and MCO layers may be used as the coating layer.

FIGS. 4A and 4B are plan views showing, respectively, an air side and a fuel side of the cross flow interconnect 400, according to various embodiments of the present disclosure. Referring to FIG. 4A, the air side of the interconnect 400 may include ribs 406 configured to at least partially define air channels 408 configured to provide air to the air electrode of a fuel cell 310 disposed thereon. The air side of the interconnect 400 may be divided into an air flow field 420 including the air channels 408, and riser seal surfaces 422 disposed on two opposing sides of the air flow field 420. One of the riser seal surfaces 422 may surround the fuel inlets 402 and the other riser seal surface 422 may surround the fuel outlets 404. The air channels 408 and ribs 406 may extend completely across the air side of the interconnect 400, such that the air channels 408 and ribs 406 terminate at opposing peripheral edges of the interconnect 400. In other words, when assembled into a stack 300, opposing ends of the air channels 408 and ribs 406 are disposed on opposing (e.g., front and back) outer surfaces of the stack, to allow the blown air to flow through the stack. Therefore, the stack may be externally manifolded for air. In an alternative embodiment, some or all of the ribs 406 may terminate at a location spaced from the opposing peripheral edges of the interconnect 400.

Riser seals 424 may be disposed on the riser seal surface 422. For example, one riser seal 424 may surround the fuel inlets 402, and one riser seal 424 may surround the fuel outlets 404. The riser seals 424 may prevent fuel and/or anode exhaust from entering the air flow field 420 and contacting the cathode of the fuel cell 310. The riser seals 424 may also operate to prevent fuel from leaking out of the fuel cell stack 100 (see FIG. 3A).

Referring to FIG. 4B, the fuel side of the interconnect 400 may include ribs 416 that at least partially define fuel channels 418 configured to provide fuel to the fuel electrode of a fuel cell 310 disposed thereon. The fuel side of the interconnect 400 may be divided into a fuel flow field 430 including the fuel channels 418, and a perimeter seal surface 432 surrounding the fuel flow field 430 and the fuel inlets and outlets 402, 404. The ribs 416 and fuel channels 418 may extend in a direction that is perpendicular or substantially perpendicular to the direction in which the air-side channels 408 and ribs 406 extend.

A frame-shaped perimeter seal 434 may be disposed on the perimeter seal surface 432. The perimeter seal 434 may be configured to prevent air entering the fuel flow field 430 and contacting the fuel electrode on an adjacent fuel cell 310. The perimeter seal 434 may also operate to prevent fuel from exiting the fuel risers 403, 405 and leaking out of the fuel cell stack 300 (see FIGS. 3A and 3B).

The seals 424, 434 may comprise a glass or ceramic seal material. The seal material may have a low electrical conductivity. In some embodiments, the seals 424, 434 may be formed by printing one or more layers of seal material on the interconnect 400, followed by sintering.

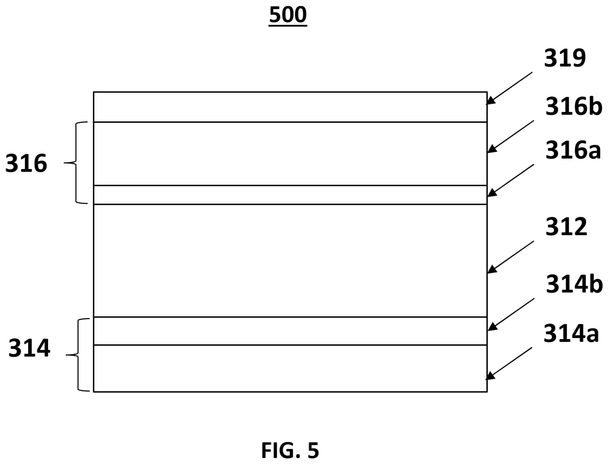

FIG. 5 is a schematic view of an electrochemical cell 500, according to an embodiment of the present disclosure. The electrochemical cell 500 may comprise a solid oxide fuel cell (SOFC) or a solid oxide electrolyzer cell (SOEC). In a solid oxide electrolyzer cell, a voltage is applied between the fuel and air electrodes, and a water (e.g., steam) containing stream is provided to the fuel electrode. The water is electrolyzed into hydrogen and oxygen at the fuel electrode. The oxygen ions are transported across the electrolyte to the air electrode. An oxygen containing exhaust stream is provided from the air electrode side of the cell. A hydrogen containing stream is provided from the fuel electrode side of the cell.

The electrochemical cell 500 contains a solid oxide electrolyte 312, a fuel electrode 314, an air electrode 316 and a chromium getter layer 319. In the embodiment described below, the electrochemical cell 500 is a SOFC, in which the fuel electrode 314 is referred to as the anode 314, and the air electrode 316 is referred to the as the cathode 316. However, in an alternative embodiment in which the electrochemical cell 500 is a SOEC, the fuel electrode 314 functions as the cathode, and the air electrode 316 functions as the anode.

The anode 314 includes an anode current collecting layer 314a and an anode functional layer 314b. The cathode 316 includes a cathode functional layer (CFL) 316a and a cathode current collecting layer (CCL) 316b.

The electrolyte 312 may comprise an ionically conductive ceramic, such as doped zirconia, doped ceria, and/or any other suitable ionically conductive ceramic oxide material. For example, the electrolyte 312 may include yttria-stabilized zirconia (YSZ), yttria-ceria-stabilized zirconia (YCSZ), scandia-stabilized zirconia (SSZ), ytterbia-ceria-scandia-stabilized zirconia (YbCSSZ), or blends thereof. In the case of YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein, by reference. In the case of YCSZ, yttria may be present in an amount equal to 8 to 10 mol %, and optionally ceria may be present in an amount equal to 0 to 3 mol %. In other embodiments, the electrolyte may include samaria, gadolinia, or yttria-doped ceria.

The anode 314 is located over a first side of the electrolyte 312. The anode functional layer 314b is located between the anode current collecting layer 314a and the first side of the electrolyte 312. The anode 314 may include at least one cermet that includes a metallic phase and a ceramic phase. The metallic phase may include a metal catalyst and the ceramic phase may include one or more ceramic materials. The ceramic phase of the anode 314 may comprise any suitable ionically conductive ceramic material, such as a doped ceria and/or a doped zirconia. For example, the ceramic phase may include, but is not limited to, gadolinia-doped ceria (GDC), samaria-doped ceria (SDC), praseodymia doped ceria (PDC), ytterbia-doped ceria (YDC), scandia-stabilized zirconia (SSZ), ytterbia-ceria-scandia-stabilized zirconia (YCSSZ), yttria stabilized zirconia (YSZ), or the like. For example, the ceramic material may comprise a doped ceria, such as samaria, gadolinia and/or praseodymia doped ceria, for example 10 to 20 mol % of Sm₂O₃, Gd₂O₃, and/or Pr₂O₃ doped CeO₂. The metallic phase may include a metal catalyst, such as nickel (Ni), which operates as an electron conductor. The metal catalyst may be in a metallic state or may be in an oxide state. For example, the metal catalyst forms a metal oxide when it is in an oxidized state. Thus, the anode may be annealed in a reducing atmosphere prior to and/or during operation of the fuel cell, to reduce the metal catalyst to a metallic state. The anode functional layer 314b contains a lower ratio of the nickel containing phase to the ceramic phase than the anode current collecting layer 314a.

The cathode 316 is located over the second side of the electrolyte 312. The CFL 316a is located between the CCL 316b and the second side of the electrolyte 312. The electrode 316 comprises the air electrode in both the SOEC and the SOFC.

In one embodiment, the CFL 316a comprises a composite of a majority-electronic conductor and a majority-ionic conductor. The CFL 316a may include a mixture of an electrically conductive perovskite metal oxide material and an ionically conductive stabilized zirconia or doped ceria material. The electrically conductive material may comprise lanthanum strontium manganite (LSM), lanthanum strontium cobalt ferrite (LSCF), lanthanum strontium cobaltite (LSC), lanthanum strontium cobalt manganite (LSCM), lanthanum strontium ferrite (LSF), lanthanum strontium cobalt nickel oxide (LSCN) (e.g., La_{0.85}Sr_{0.15}Co_{0.9}Ni_{0.1}O₃ ), combinations thereof, or the like.

In one embodiment, the electrically conductive material may comprise LSM. The LSM may be represented by a formula: (La_{1-z} Sr_{z})_{q}MnO_{3-d}, wherein z ranges from 0.1 to 0.2, q ranges from 0.9 to 1, such as 0.95 to 1, and d is the equilibrium oxygen deficiency which ranges from 0 to 0.2, such as 0 to 0.1. For example, the LSM may comprise La_{0.8}Sr_{0.2}MnO_{3-d} or A-site deficient LSM, in which q ranges from 0.9 to 0.99, such as 0.95 to 0.99, for example (La_{0.8}Sr_{0.2})_{0.97}MnO_{3-d}, wherein d ranges from 0 to 0.1.

In one embodiment, the ionically conductive material may comprise a stabilized zirconia, such as yttria-stabilized zirconia (YSZ), yttria-ceria-stabilized zirconia (YCSZ), scandia-stabilized zirconia (SSZ), ytterbia-ceria-scandia-stabilized zirconia (YbCSSZ), or blends thereof. In the case of YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %. In another embodiment, the ionically conductive material may comprise a doped ceria, such samaria, gadolinia, or yttria-doped ceria.

The CFL 316a may include from about 10 wt.% to about 90 wt.%, such as about 40 wt.% to about 60 wt.%, of the electrically conductive material described above, and from about 10 wt.% to about 90 wt.%, such as about 40 wt.% to about 60 wt.%, of the ionically conductive stabilized zirconia or doped ceria material. For example, the CFL 316a may be a composite of the LSM and the YbCSSZ.

The CCL 316b comprises the majority-electronic conductor with or without the majority-ionic conductor. If the majority-ionic conductor, such as a stabilized zirconia or a doped ceria, is included in the CCL 316b, the ratio of then majority-electronic conductor to the majority-ionic conductor in the CCL 316b is higher than in the CFL 316a. Alternatively, CCL 316 consists essentially of the majority-electronic conductor with no majority-ionic conductor or unavoidable amount of the majority-ionic conductor that diffuses into the CCL 316b from the CFL 316a during cell fabrication or cell operation.

In one embodiment, the CCL 316b includes or consists essentially of the LSM. The CCL 316b may include from about 90 wt.% to about 100 wt.%, such as about 95 wt.% to about 99 wt.%, of the electrically conductive LSM material described above, and from 0 wt.% to about 10 wt.%, such as about 0.01 wt.% to about 1 wt.%, of the ionically conductive stabilized zirconia or doped ceria material.

The chromium getter layer 319 is located on the air electrode 316 (e.g., on the cathode of the SOFC). The chromium getter layer 319 may be located on or over the CCL 316b of the air electrode 316, such that the CCL 316b is located between the CFL 316a and the chromium getter layer 319.

The chromium getter layer 319 is configured to capture chromium vapor diffusing out of a neighboring chromium-containing interconnect in the stack during stack operation. The chromium getter layer 319 may comprise a composite material including a perovskite phase, such as a lanthanum strontium manganite (LSM) perovskite phase, and a spinel phase, such as manganese cobalt oxide (MCO) spinel phase. For example, the chromium getter layer 319 may include an LSM-MCO composite material represented by a formula:

Q%(La₁₋ₓSrₓ)_{1-z}MnO₃- (100-Q)%Mn_{1.5+y}Co_{1.5-y}O₄,

wherein Q% comprises weight percent of the perovskite phase, which ranges from 95 wt. % to 50 wt. %, x ranges from 0.2 to 0.6, z ranges from 0 to 0.1, and y ranges from -0.5 to 0.5. Thus, x, y, and z are atomic fractions, while Q is the weight percent of the LSM perovskite phase. The chromium getter layer 319 may have a perovskite/spinel weight ratio ranging from about 95:5 to about 50:50. In some embodiments, the perovskite phase may contain some cobalt in addition to oxygen, manganese, strontium and lanthanum. The cobalt may diffuse out of the MCO spinel phase into the LSM perovskite phase and replace the manganese to form (La₁₋ₓSrₓ)_{1-z}Mn₁₋ₜCoₜO₃ where t ranges between 0.01 to 0.2. In some embodiments, the spinel phase may have a 1:1 Mn:Co atomic ratio. However, in other embodiments, the spinel phase may have a Mn:Co atomic ratio other than 1:1 atomic ratio, such as atomic ratios ranging from 1:2 to 2:1.

The chromium getter layer 319 may be formed by depositing an LSM-MCO composite powder on the cathode 316 using any suitable deposition process, such as a wet or dry deposition or coating process. For example, the composite powder may be incorporated into an ink that is applied to the cathode electrode 316 or may be directly deposited on the cathode electrode 316 as a composite powder. In some embodiments, the deposited composite powder or ink may be sintered in an oxidizing or an inert atmosphere to density the composite powder and complete the chromium getter layer 319. Fuel cells 1 in stack 20 and fuel cells 310 in stack 300 may comprise the same structure as electrochemical cell 500.

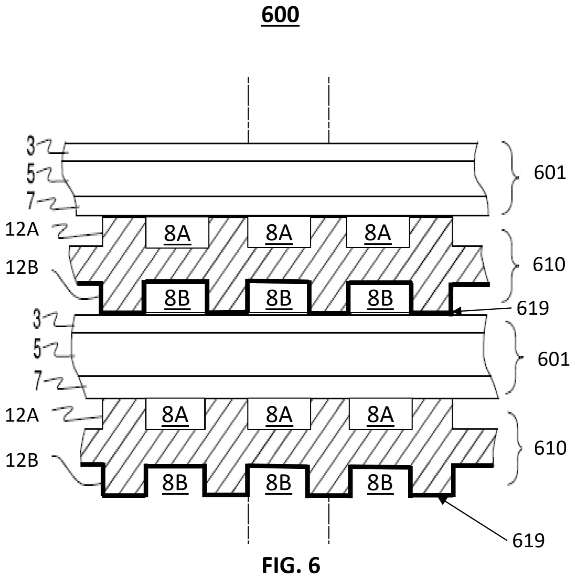

In another embodiment shown in FIG. 6, a composite powder may be applied to the air side of a chromium-containing interconnect 610 to form the chromium getter layer, which may also be referred to as a chromium barrier layer 619. FIG. 6 illustrates a portion of a solid oxide electrochemical cell stack 600, such as a portion of a SOFC or an SOEC stack. The stack 600 may have the configuration of the stack 20 illustrated in FIGS. 1A - 1C, the configuration of the stack 300 illustrated in FIGS. 3A and 3B or another configuration. The stack includes solid oxide electrochemical cells (e.g., SOFCs or SOECs) 601 and interconnects 610.

The interconnects 610 may have the configuration of the interconnects 10 illustrated in FIGS. 2A and 2B, the configuration of the interconnects 400 illustrated in FIGS. 4A and 4B, or another configuration. The interconnects 610 may comprise a chromium-iron alloy, such as 4-6 weight percent iron, optionally 1 or less weight percent yttrium and balance chromium alloy. Alternatively, any other suitable chromium-containing interconnect material, such as chromium-containing stainless steel (e.g., ferritic stainless steel, SS446, SS430, etc. which contain at least 15 wt.% Cr) or iron-chromium alloy (e.g., Crofer^{tm} 22 APU alloy which contains 20 to 24 wt.% Cr, less than 1 wt.% Mn, Ti and La, and balance Fe, or ZMG^{tm} 232L alloy which contains 21 to 23 wt.% Cr, 1 wt.% Mn and less than 1 wt.% Si, C, Ni, Al, Zr and La, and balance Fe), may be used.

As shown in FIG. 6, the chromium barrier layer 619 is located on the air side of the chromium-containing interconnect 610. The chromium barrier layer 619 may be located over the air rib 12B tips and optionally on the surface of the air channels 8B of the interconnect 610.

In another embodiment, the stack 600 includes both the chromium barrier layer 619 formed on the air side of the interconnect 610 and the chromium getter layer 319 formed on the air electrode 316. In this embodiment, the chromium barrier layer 619 may contact the chromium getter layer 319 in the stack 600.

The LSM-MCO composite powder may include composite particles comprising perovskite (e.g., LSM) and spinel (e.g., MCO) phases in each particle. In other words, instead of a mixture of LSM particles and MCO particles, at least 95% of the particles, such as 95 to 100% of the particles of the composite powder, include both the perovskite and the spinel phases. Therefore, the powder particles comprise composite particles.

For example, the LSM-MCO composite powder may comprise composite particles that each comprise from 50 wt.% to 95 wt.% of the (La₁₋ₓSrₓ)_{1-z}MnO₃ phase and from 50 wt.% to 5 wt.% of the Mn_{1.5}+Co_{1.5-y}O₄ phase, where x ranges from 0.2 to 0.6, z ranges from 0 to 0.1, and y ranges from -0.5 to 0.5. In some embodiments, the composite particles may comprise from about 60 wt.% to about 80 wt.% (La_{0.8}Sr_{0.2})_{0.95}MnO₃ and from about 40 wt.% to about 20 wt.% Mn_{1.5}Co_{1.5}O₄, such as from about 65 wt.% to about 75 wt.% (La_{0.8}Sr_{0.2})_{0.95}MnO₃ and from about 35 wt.% to about 25 wt.% Mn_{1.5}Co_{1.5}O₄. For example, the composite particles may each comprise, on average, about 70 wt.% (La_{0.8}Sr_{0.2})_{0.95}MnO₃ and about 30 wt.% Mn_{1.5}Co_{1.5}O₄.

In some embodiments, the LSM-MCO composite powder particles may include a perovskite phase having a certain amount of Co, and the A-site deficiency may deviate from the original value. However, it is believed that the composite powder particles include only perovskite and spinel phases, and the phases are believed to be distributed uniformly in the powder particles.

As discussed in detail below, the LSM-MCO composite powder of the embodiments of the present disclosure may be formed by calcining (e.g., sintering) a mixture of metal oxides formed from precursors via a solid state reaction, a co-precipitation reaction, combustion spray pyrolysis (CSP), or another method. The precursors may include precursor particles comprising metal oxides, metal carbonates, and/or metal salts (e.g., metal nitrates and/or metal nitrate hydrides) of La, Sr, Mn, and Co.

A comparative example chromium getter layer may be formed using an LSM-MCO powder mixture which includes particles of LSM and particles of MCO. In the comparative example process, the LSM and MCO powders are separately manufactured and then mixed together to form a composite LSM-MCO powder including LSM particles and MCO particles. In particular, the LSM and MCO powders each require multiple separate processing steps. The resultant LSM powder and MCO powder are then mixed to form an LSM-MCO powder comprising LSM particles and MCO particles. As such, manufacturing of the comparative example LSM-MCO powder mixture uses more processing steps than the embodiment method of making composite particles. Furthermore, the embodiment method may result in more uniform distribution of the LSM and MCO phases in the chromium getter or barrier layer, which may lead to less MCO phase interdiffusion and/or out-migration from the layer than the comparative example method. This leads to less voids in the embodiment chromium getter or barrier layer as a function of stack operating time relative to the comparative example chromium getter or barrier layer.

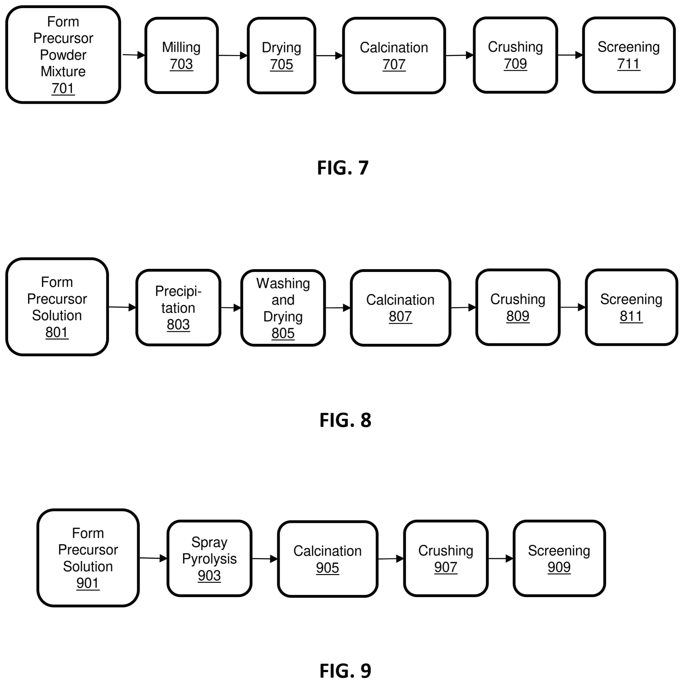

FIG. 7 is a flow chart illustrating steps in a solid-state method of forming a LSM-MCO composite powder, according to a first embodiment of the present disclosure. Referring to FIG. 7, in step 701, the method may include forming a precursor powder mixture by mixing different metal-containing precursor powders, such as powders comprising oxides and/or carbonates of La, Mn, Sr, and Co. For example, the precursor powder may include metal oxide particles comprising La₂O₃ particles, SrCO₃ particles, MnO₂ particles, and Co₃O₄ particles. Amounts of each of the precursor powders included in the mixture may be selected based on a desired stoichiometry of a final chromium getter or barrier layer. In some embodiments, the precursor powders may optionally be inspected prior to mixing.

In step 703, a liquid dispersion medium, such as water, and a milling medium, such as YSZ, may be added to the precursor powder mixture to form a wet mixture (e.g., a suspension). The wet mixture may be milled to reduce the average particle size of the precursor powders. For example, the wet mixture may be ball milled in a ball mill to reduce and/or normalize a mixture particle size.

In step 705, the dispersion medium may be removed from the wet mixture before drying the wet mixture. For example, the wet mixture may be spray dried after removing the dispersion medium and form a dried precursor powder. However, any suitable drying process may be used.

In step 707, the dried precursor powder may be calcined to form a composite powder comprising particles having perovskite and spinel phases. The calcination may be performed at a temperature ranging from about 800 °C to about 1300 °C, such as from about 900 °C to about 1200 °C, for a duration ranging from about 30 minutes to about 6 hours, such as from about 1 hour to about 5 hours. For example, suitable calcination conditions may include a temperature of 900 °C and a duration of 5 hours, a temperature of 1100 °C and a duration of 2 hours, or a temperature of 1200 °C and a duration of 1 hour.

In step 709, the composite powder may be crushed to breakup agglomerations generated during the calcination and/or to control the average particle size of the composite powder.

In step 711, the crushed precursor powder may be screened to remove any remaining agglomerations and/or oversized particles and thereby produce a finished LSM-MCO composite powder.

FIG. 8 is a flow chart illustrating steps in a co-precipitation method of forming the LSM-MCO composite powder, according to a second embodiment of the present disclosure. Referring to FIG. 8, in step 801 the method may include forming a precursor solution by mixing different metal salt precursor powders, such as powders comprising salts of La, Mn, Sr, and Co, in an aqueous or organic solvent. For example, the precursor powders may include metal nitrate particles, such as La(NO₃)₃ particles, Sr(NO₃)₂ particles, Mn(NO₃)₂ particles, and Co(NO₃)₂ particles, and/or their hydrates, which may be dissolved in water to form the precursor solution. Amounts of each of the precursor materials included in the precursor solution may be selected based on a desired stoichiometry of a final chromium getter or barrier layer.

In step 803, a precipitation process may be performed by adding the precursor solution to a precipitation solution to form a metal-containing precipitate. In various embodiments, the precipitation solution may contain high concentration of anions, such as CO₃²⁻, OH⁻, or C₂O₄²⁻, which could form insoluble salts, such as carbonates, hydroxides or oxalates, with the metal ions from the precursor solution. For example, the precipitation solution may comprise a sodium carbonate, sodium hydroxide or sodium oxalate solution having a pH of at least 10 (e.g., a basic solution). In some embodiments, the precursor solution may be added to the precipitation solution over time (e.g., dropwise) while stirring the precipitation solution to form the precipitate. In this embodiment, the precipitated metal oxide particles comprise metal carbonate particles which also contain carbon. Thus, the precipitate may include lanthanum carbonate particles, strontium carbonate particles, manganese carbonate particles and cobalt carbonate particles.

In step 805, the precipitate may be collected, washed, and dried, to form a precursor powder. For example, the precipitate may be collected from the precipitation solution, washed multiple times in distilled water, and then dried using any suitable drying process.

In step 807, the dried precursor powder may be calcined to form a composite powder comprising particles having perovskite and spinel phases. The calcination may be performed at a temperature ranging from about 900 °C to about 1200 °C, for a duration ranging from about 30 minutes to about 6 hours, such as from about 1 hour to about 5 hours. For example, suitable calcination conditions may include a temperature of 900 °C and a duration of 5 hours, a temperature of 1100 °C and a duration of 2 hours, or a temperature of 1200 °C and a duration of 1 hour.

In step 809, the calcined composite powder may be crushed to breakup agglomerations generated during the calcination and/or to control the average particle size of the composite powder.

In step 811, the crushed precursor powder may be screened to remove any remaining agglomerations and/or oversized particles and thereby produce a finished LSM-MCO composite powder.

FIG. 9 is a flow chart illustrating steps of a combustion spray pyrolysis method of forming the LSM-MCO composite powder, according to a third embodiment of the present disclosure. Referring to FIG. 9, in step 901 the method may include forming a precursor solution by mixing different precursor materials, such as metal nitrate salts and/or nitrate hydride salts of La, Mn, Sr, and Co in an aqueous solvent, and an organic compound fuel, such as glycine, citric acid, or sugar. For example, the precursor materials may include La(NO₃)₃, Sr(NO₃)₂, Mn(NO₃)₂, and Co(NO₃)₂ particles and/or their hydrates, which may be dissolved in water to form the precursor solution. Sugar is then added into the metal nitrate solution while stirring to form a homogeneous solution. Amounts of each of the precursor materials included in the precursor solution may be selected based on a desired stoichiometry of a final chromium getter or barrier layer. The molar ratio of sugar to total amount of nitrates is from 1 to 2.

In step 903, the precursor solution may be sprayed into a hot chamber. In particular, droplets of the solution may be dried, and metal salts and organic fuel included in droplets may combust to form a metal oxide precursor powder.

In step 905, the precursor powder may be calcined to form a composite powder comprising particles having perovskite and spinel phases. The calcination may be performed at a temperature ranging from about 900 °C to about 1200 °C, for a duration ranging from about 30 minutes to about 6 hours, such as from about 1 hour to about 5 hours. For example, suitable calcination conditions may include a temperature of 900 °C and a duration of 5 hours, a temperature of 1100 °C and a duration of 2 hours, or a temperature of 1200 °C and a duration of 1 hour.

In step 907, the composite powder may be crushed to breakup agglomerations generated during the calcination and/or to control the average particle size of the composite powder.

In step 909, the crushed precursor powder may be screened to remove any remaining agglomerations and/or oversized particles and thereby produce a finished LSM-MCO composite powder.

In various embodiments, the LSM-MCO composite powder may have an average particle size ranging from about 10 microns to about 50 microns, such as from about 15 microns to about 40 microns, for example from about 20 microns to about 30 microns. The composite powder formed according to various embodiments of the present disclosure may be used to form the chromium barrier layer 619 on the air side of a chromium-containing interconnect 610, as shown in FIG. 6, on the air side of a chromium-containing interconnect 400, as shown in FIG. 3B, or on the air side of a chromium-containing interconnect 10, as shown in FIG. 2A. The composite powder may be deposited on an interconnect using any suitable deposition process, such as plasma spraying, wet coating and sintering, etc., to form the chromium barrier layer 619.

In other embodiments, the composite powder formed according to various embodiments of the present disclosure may be used to form the chromium getter layer 319 on the air electrode 316 of a solid oxide electrochemical cell 500, as shown in FIG. 5, on the air electrode 3 of a solid oxide electrochemical cell 1, as shown in FIG. 1C, or on the air electrode 316 of a solid oxide electrochemical cell 310, as shown in FIG. 3D. In these embodiments, the composite powder may be subjected to additional milling and drying steps to reduce the average particle size, such that the LSM-MCO composite powder may have an average particle size ranging from about 0.1 microns to about 10 microns, such as from about 0.5 microns to about 5 microns, for example from about 1 micron to about 2 microns. The reduced particle size composite powder may be provided into an ink, and the ink may be printed or coated on the air electrode of a solid oxide electrochemical cell. The ink may be dried and sintered to form the chromium getter layer 319.

### Example 1

The following Example 1 may be used to make 500 kg of LSM-MCO composite powder (70 wt.% (La_{0.8}Sr_{0.2})_{0.95}MnO₃ - 30 wt.% Mn_{1.5}Co_{1.5}O₄) via a solid-state reaction.

In particular, 192.45 kg of La₂O₃, 43.6 kg of SrCO₃, 218.55 kg of MnO₂, and 77 kg of Co₃O₄ are milled with YSZ medium and 500 Kg of distilled water until an average particle size, d₅₀ of 1 micron is reached. The milled powder is separated from the milling medium and subsequently spray dried. The dried powder is then calcined at 1100 °C for 2 hours. The calcined powder is then crushed and screened before packaging.

### Example 2

The following Example 2 may be used to produce 500 Kg powder of 70 wt.% (La_{0.8}Sr_{0.2})_{0.95}MnO₃ - 30 wt.% Mn_{1.5}Co_{1.5}O₄ by co-precipitation.

In particular, 511.6Kg of La(NO₃)₃·6H₂O, 62.5Kg of Sr(NO₃)₂, 630.7 Kg of Mn(NO₃)₂·4H₂O, and 278.9 Kg of Co(NO₃)₂·6H₂O are dissolved and mixed to form a metal salt precursor solution. The precursor solution is then added dropwise to a Na₂CO₃ solution, containing 348.7kg Na₂CO₃, with stirring to form precipitates. The precipitates are washed with distilled water multiple times and dried into powder. The dried powder is then calcined at 1100 °C for 2 hours. The calcined powder is then crushed and screened before packaging.

### Example 3

The following Example 3 may be used to produce 500 Kg powder of 70 wt.% (La_{0.8}Sr_{0.2})_{0.95}MnO₃ - 30 wt.% Mn_{1.5}Co_{1.5}O₄ by combustion spray pyrolysis.

In particular, 511.6Kg of La(NO₃)₃·6H₂O, 62.5Kg of Sr(NO₃)₂, 630.7 Kg of Mn(NO₃)₂·4H₂O, 278.9 Kg of Co(NO₃)₂·6H₂O, and a suitable amount of sugar fuel are dissolved and mixed to form a homogeneous precursor solution. The precursor solution is sprayed into a hot chamber to dry the droplets and to react the metal nitrates with sugar through combustion to form a powder of metal oxides. The powder is calcined at 1100 °C for 2 hours. The calcined powder is then crushed and screened before packaging.

Fuel cell and electrolyzer cell systems incorporating the SOFCs and SOECs of the embodiments of the present disclosure are beneficial to the climate by reducing greenhouse gas emissions.

The foregoing descriptions are provided merely as illustrative examples and are not intended to require or imply that the steps of the various embodiments must be performed in the order presented. As will be appreciated by one of skill in the art, the order of steps in the foregoing embodiments may be performed in any order. The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.
The invention also refers to the following embodiments, wherein the term "claim" means "embodiment":
1. A method, comprising:
   providing a precursor powder mixture containing lanthanum oxide particles, strontium oxide particles, manganese oxide particles and cobalt oxide particles; and
   calcining the precursor powder mixture, wherein a lanthanum strontium manganate - manganese cobalt oxide (LSM-MCO) composite powder containing composite particles comprising perovskite and spinel phases is formed.
2. The method of claim 1, wherein the step of calcining is conducted at a temperature ranging from about 800 °C to about 1300 °C, for a duration ranging from about 30 minutes to about 6 hours.
3. The method of claim 1, wherein the composite particles comprise from 50 wt.% to 95 wt.% (La₁₋ₓSrₓ)_{1-z}MnO₃ and from 50 wt.% to 5 wt.% Mn_{1.5+y}Co_{1.5-y}O₄, wherein x ranges from 0.2 to 0.6, z ranges from 0 to 0.1, and y ranges from -0.5 to 0.5.
4. The method of claim 1, wherein the composite particles comprise from about 60 wt.% to about 80 wt.% (La_{0.8}Sr_{0.2})_{0.95}MnO₃ and from about 40 wt.% to about 20 wt.% Mn_{1.5}Co_{1.5}O₄.
5. The method of claim 1, further comprising forming the precursor powder mixture by a solid-state reaction.
6. The method of claim 5, wherein the forming of the precursor powder mixture by the solid-state reaction comprises:
   mixing precursor particles comprising lanthanum oxide particles, strontium oxide particles, manganese oxide particles and cobalt oxide particles;
   adding a dispersion medium to the precursor particles to form a wet precursor mixture;
   milling the wet precursor mixture; and
   drying the milled wet precursor mixture to form the precursor powder.
7. The method of claim 6, further comprising:
   crushing the precursor powder; and
   screening the crushed precursor powder.
8. The method of claim 6, wherein the milling comprises ball milling, and the drying comprises spray drying.
9. The method of claim 1, further comprising forming the precursor powder mixture by precipitation.
10. The method of claim 9, wherein:
   the lanthanum oxide particles, the strontium oxide particles, the manganese oxide particles and the cobalt oxide particles comprise lanthanum carbonate particles, strontium carbonate particles, manganese carbonate particles and cobalt oxalate particles, respectively; and
   the forming of the precursor powder mixture by the precipitation comprises forming a precursor solution by mixing a solvent and precursor particles comprising salts of La, Sr, Mn, and Co; and adding the precursor solution to a precipitation solution to precipitate the lanthanum carbonate particles, the strontium carbonate particles, the manganese carbonate particles and the cobalt carbonate particles.
11. The method of claim 10, further comprising:
   removing the lanthanum carbonate particles, the strontium carbonate particles, the manganese carbonate particles and the cobalt carbonate particles from the precipitation solution;
   washing the lanthanum carbonate particles, the strontium carbonate particles, the manganese carbonate particles and the cobalt carbonate particles; and
   drying the lanthanum carbonate particles, the strontium carbonate particles, the manganese carbonate particles and the cobalt carbonate particles.
12. The method of claim 10, wherein:
   the precipitation solution has a pH or at least 10; and
   the precursor solution is added to the precipitation solution by a drop-wise addition while stirring the precipitation solution.
13. The method of claim 11, further comprising:
   crushing the calcined precursor powder mixture after the step of calcining to form a crushed calcined powder; and
   screening the crushed calcined powder.
14. The method of claim 8, wherein:
   the precipitation solution comprises a sodium carbonate solution; and
   the precursor particles comprise La(NO₃)₃, Sr(NO₃)₂, Mn(NO₃)₂, and Co(NO₃)₂ particles or their hydrates.
15. The method of claim 1, further comprising forming the precursor powder mixture by combustion spray pyrolysis.
16. The method of claim 15, wherein the forming of the precursor powder mixture by the combustion spray pyrolysis comprises:
   forming a precursor solution by mixing a solvent and precursor particles comprising La, Sr, Mn, and Co salts; and
   spray pyrolyzing and combusting the precursor solution to form the lanthanum oxide particles, the strontium oxide particles, the manganese oxide particles and the cobalt oxide particles.
17. The method of claim 16, wherein the precursor particles comprise La(NO₃)₃, Sr(NO₃)₂, Mn(NO₃)₂, and Co(NO₃)₂ particles or their hydrates, and an organic compound fuel.
18. The method of claim 1, further comprising:
   providing the LSM-MCO composite powder into an ink; and
   depositing the ink onto an air electrode of a solid oxide electrochemical cell to form a chromium getter layer on the air electrode.
19. The method of claim 1, further comprising:
   depositing the LSM-MCO composite powder onto an air side of a chromium-containing interconnect to form a chromium barrier layer; and
   placing the interconnect into a solid oxide electrochemical cell stack such that the chromium barrier layer contacts an air electrode of a solid oxide electrochemical cell in the solid oxide electrochemical cell stack.
20. The method of claim 19, wherein the solid oxide electrochemical cell stack comprises a solid oxide fuel cell stack or a solid oxide electrolyzer cell stack.
21. The method of claim 1, further comprising:
   depositing the LSM-MCO composite powder onto an air electrode of a solid oxide electrochemical cell to form a chromium barrier layer on the air electrode; and
   placing the electrochemical cell into a solid oxide electrochemical stack such that the chromium barrier layer on the air electrode contacts an air side of an interconnect in the solid oxide electrochemical stack.
22. The method of claim 1, further comprising:
   depositing the LSM-MCO composite powder onto an air side of a chromium-containing interconnect to form a chromium barrier layer;
   depositing the LSM-MCO composite powder onto an air electrode of a solid oxide electrochemical cell to form a chromium barrier layer on the air electrode; and
   placing the interconnect and the solid oxide electrochemical cell into a solid oxide electrochemical cell stack such that the chromium barrier layer on the air side of the interconnect contacts the chromium barrier layer on the air electrode of the solid oxide electrochemical cell.

## Claims

1. A method, comprising:
providing a precursor powder mixture containing lanthanum oxide particles, strontium oxide particles, manganese oxide particles and cobalt oxide particles; and
calcining the precursor powder mixture, wherein a lanthanum strontium manganate - manganese cobalt oxide (LSM-MCO) composite powder containing composite particles comprising perovskite and spinel phases is formed.

2. The method of claim 1, wherein the step of calcining is conducted at a temperature ranging from about 800 °C to about 1300 °C, for a duration ranging from about 30 minutes to about 6 hours.

3. The method of claim 1, wherein the composite particles comprise from 50 wt.% to 95 wt.% (La₁₋ₓSrₓ)_{1-z}MnO₃ and from 50 wt.% to 5 wt.% Mn_{1.5+y}Co_{1.5-y}O₄, wherein x ranges from 0.2 to 0.6, z ranges from 0 to 0.1, and y ranges from -0.5 to 0.5.

4. The method of claim 1, wherein the composite particles comprise from about 60 wt.% to about 80 wt.% (La_{0.8}Sr_{0.2})_{0.95}MnO₃ and from about 40 wt.% to about 20 wt.% Mn_{1.5}Co_{1.5}O₄.

5. The method of claim 1, further comprising forming the precursor powder mixture by a solid-state reaction.

6. The method of claim 5, wherein:
the forming of the precursor powder mixture by the solid-state reaction comprises:
mixing precursor particles comprising lanthanum oxide particles, strontium oxide particles, manganese oxide particles and cobalt oxide particles;
adding a dispersion medium to the precursor particles to form a wet precursor mixture;
milling the wet precursor mixture; and
drying the milled wet precursor mixture to form the precursor powder.
the method further comprises:
crushing the precursor powder; and
screening the crushed precursor powder, wherein the milling comprises ball milling, and the drying comprises spray drying.

7. The method of claim 1, further comprising forming the precursor powder mixture by precipitation.

8. The method of claim 7, wherein:
the lanthanum oxide particles, the strontium oxide particles, the manganese oxide particles and the cobalt oxide particles comprise lanthanum carbonate particles, strontium carbonate particles, manganese carbonate particles and cobalt oxalate particles, respectively; and
the forming of the precursor powder mixture by the precipitation comprises forming a precursor solution by mixing a solvent and precursor particles comprising salts of La, Sr, Mn, and Co; and adding the precursor solution to a precipitation solution to precipitate the lanthanum carbonate particles, the strontium carbonate particles, the manganese carbonate particles and the cobalt carbonate particles.

9. The method of claim 8, further comprising:
removing the lanthanum carbonate particles, the strontium carbonate particles, the manganese carbonate particles and the cobalt carbonate particles from the precipitation solution;
washing the lanthanum carbonate particles, the strontium carbonate particles, the manganese carbonate particles and the cobalt carbonate particles;
drying the lanthanum carbonate particles, the strontium carbonate particles, the manganese carbonate particles and the cobalt carbonate particles;
crushing the calcined precursor powder mixture after the step of calcining to form a crushed calcined powder; and
screening the crushed calcined powder.
wherein:
the precipitation solution has a pH or at least 10;
the precursor solution is added to the precipitation solution by a drop-wise addition while stirring the precipitation solution;
the precipitation solution comprises a sodium carbonate solution; and
the precursor particles comprise La(NO₃)₃, Sr(NO₃)₂, Mn(NO₃)₂, and Co(NO₃)₂ particles or their hydrates.

10. The method of claim 1, further comprising forming the precursor powder mixture by combustion spray pyrolysis.

11. The method of claim 10, wherein:
the forming of the precursor powder mixture by the combustion spray pyrolysis comprises:
forming a precursor solution by mixing a solvent and precursor particles comprising La, Sr, Mn, and Co salts; and
spray pyrolyzing and combusting the precursor solution to form the lanthanum oxide particles, the strontium oxide particles, the manganese oxide particles and the cobalt oxide particles; and
the precursor particles comprise La(NO₃)₃, Sr(NO₃)₂, Mn(NO₃)₂, and Co(NO₃)₂ particles or their hydrates, and an organic compound fuel.

12. The method of claim 1, further comprising:
providing the LSM-MCO composite powder into an ink; and
depositing the ink onto an air electrode of a solid oxide electrochemical cell to form a chromium getter layer on the air electrode.

13. The method of claim 1, further comprising:
depositing the LSM-MCO composite powder onto an air side of a chromium-containing interconnect to form a chromium barrier layer; and
placing the interconnect into a solid oxide electrochemical cell stack such that the chromium barrier layer contacts an air electrode of a solid oxide electrochemical cell in the solid oxide electrochemical cell stack, wherein the solid oxide electrochemical cell stack comprises a solid oxide fuel cell stack or a solid oxide electrolyzer cell stack.

14. The method of claim 1, further comprising:
depositing the LSM-MCO composite powder onto an air electrode of a solid oxide electrochemical cell to form a chromium barrier layer on the air electrode; and
placing the electrochemical cell into a solid oxide electrochemical stack such that the chromium barrier layer on the air electrode contacts an air side of an interconnect in the solid oxide electrochemical stack.

15. The method of claim 1, further comprising:
depositing the LSM-MCO composite powder onto an air side of a chromium-containing interconnect to form a chromium barrier layer;
depositing the LSM-MCO composite powder onto an air electrode of a solid oxide electrochemical cell to form a chromium barrier layer on the air electrode; and
placing the interconnect and the solid oxide electrochemical cell into a solid oxide electrochemical cell stack such that the chromium barrier layer on the air side of the interconnect contacts the chromium barrier layer on the air electrode of the solid oxide electrochemical cell.
